# EUROPEAN PATENT SPECIFICATION

(11) **EP 3 507 424 B1**
(45) Date of publication and mention of the grant of the patent: **04.06.2025**
(21) Application number: 16914376.5
(22) Date of filing: 31.08.2016
(51) Int. Cl.: E03B 3/02, B01D 29/25, B01D 29/70

(54) **SELF-CLEANING FILTER DEVICE ADAPTABLE TO THE VOLUME OF RAINWATER AND A METHOD FOT ITS USE**
SELBSTREINIGENDE FILTERVORRICHTUNG MIT ANPASSUNGSFÄHIGKEIT AN DIE REGENWASSERMENGE UND VERFAHREN ZUR VERWENDUNG DAVON
DISPOSITIF DE FILTRE AUTONETTOYANT ADAPTABLE AU VOLUME D'EAU DE PLUIE ET SON PROCÉDÉ D'UTILISATION

(43) Date of publication of application: 10.07.2019
(73) Proprietor: Garios, Wadih, 36026500 Juiz De Fora (BR)
(72) Inventor: Garios, Wadih, 36026500 Juiz De Fora (BR)
(74) Representative: Valet Patent Services Limited
(86) International application number: PCT/BR2016/050213
(87) International publication number: WO 2018/039753

(56) References cited:
- BR-U2- MU9 002 224
- DE-A1- 19 748 233
- DE-A1- 19 807 068
- DE-A1- 19 942 240
- DE-A1- 3 812 136
- DE-U1- 202015 106 602
- US-A- 1 753 577
- US-A- 4 043 918
- US-B1- 6 219 972
- US-B1- 6 219 972
- US-B2- 9 260 321

## Description

### FIELD OF THE INVENTION

The present invention relates to a self-cleaning filter device for rainwater which adapts to rainfall conditions and enables the continuous filtering of rainwater without the need to stop its operation to exchange the filter element.

The self-cleaning filter device adaptable to the volume of rainwater object of the invention is designed for use in continuous flow filtration of rainwater collected in various building locations or residential, commercial or industrial facilities.

### RELATED ART

Usually, after the beginning of a rainfall, the first collected rainwater contains a high concentration of debris, such as dust, insects and small animals, etc., which have accumulated over time in various water catchment locations and carried by the flow of rainwater to the rainwater collection and filtering system.

This debris tends to accumulate in the filter elements of the rainwater filtration devices known in the art, thus reducing their filtering capacity due to said accumulation of debris.

In particular, the accumulation of plastic bags, paper and smaller debris on the walls of the filter elements, greatly impairs the filtering ability of the filtering devices, and may even make them practically inoperative. In these situations, it is necessary to interrupt the flow of filtered rainwater in order to clean or replace the filter element. Due to this loss of filtration capacity of the filter elements of the filtration devices, preventive and / or corrective measures become necessary to solve this problem.

One such measure is to perform periodic cleaning of the filter elements of the filtering devices, or their replacement, if necessary, especially in periods when it is not raining. This measure solves the problem only in part because debris that was deposited in the filter elements during the initial period of rainfall will remain there, compromising the filtering capability of the filtering devices.

In these situations, if accumulation of debris which is deposited on the filter elements is very large, there will be a serious impairment of the filtering capacity of the rainwater filtering devices.

A solution to this problem would be to divert the flow of rainwater to the sewage system in order to clean or replace the filter elements. The disadvantage of this solution is that it would not be possible to take advantage of the water flow that was diverted to the sewer, which cannot be filtered.

One possibility of avoiding this loss would be the provision of reservoirs for the temporary storage of rainwater flow, while the filter elements of the filtration devices are being cleaned or replaced.

However, in addition to increasing the funding costs of system installation, the provision of such reservoirs could also cause problems. The storage of rainwater in these reservoirs facilitates settling of debris at the bottom, which, with time, tends to decrease storage capabilities. The possibility of organic contaminants should also be mentioned, such as the debris of dead animals and insects, which also accumulates at the bottom, which would be undesirable. As a result, it would then be necessary to perform periodic cleaning of these reservoirs, thereby increasing the cost of system maintenance.

Another solution to solve the problem would be to use multiple filtering devices, designed in such a way that the momentary stop of one of them for cleaning or replacement of filter elements would not adversely affect the filtering ability of the rainwater filtering system.

The disadvantage of this solution is the increased cost for the installation of multiple filtering devices, not to mention the need to provide periodic cleaning or replacement of filter elements, which would also increase the maintenance cost of the filtration system.

A solution to this problem is proposed in the patent US9260321 B2 belonging to the applicant of this present application.

US9260321 B2 describes a self-cleaning filter separator and adapter to rainwater volume having a filtering device comprising first, second and third filter elements (10, 11, 13), the first and the third filter element being expandable and flexible and the second and central element being not expandable and not flexible. All the three filter elements are provided with walls made of a screen mesh which retain debris, sand and the like but allow rainwater to pass through its mesh interstices.

The non flexible second filter element 11 has its ends connected to the flexible first and third filter elements (10, 13). A calibrator 5 is attached to the central filter element 11 and is also attached to the lower end of a rod 9 around which it can perform an oscillating motion. The location where the calibrator 5 is attached to the central filter element 11 can be changed as needed, in order to regulate the inclination of the central filter element 11. The upper end of the rod 9 is pivotally attached to the upper cover of the filtering device, in a manner that can also perform an oscillating motion.

The self-cleaning filter separator and adapter to rainwater volume of US9260321 B2 is able to adapt to changes in the volume of rainwater, wherein the central second filter element 11 may tilt in consequence of the passing flow of rainwater thereby making the flexible first and third filter elements (10, 12) to expand or to retract depending on said passing flow of rainwater, whereby promoting the removal of debris from the interior of the filtering device, which accumulated there during the filtering process.

Consequently, the first, second and third filter elements 10, 11, 13 can perform oscillating movements between them as a consequence of the flow rate of the flow of rainwater passing through their interior, adjusting their position according to the intensity of the rain. On occasions when the flow of rainwater is low, the central semi-rigid filter element 11 is in its initial position, substantially sloped, and thus the filter elements 10, 11, 13 are in a very inclined position, forming an obtuse angle to the upper wall of the self-cleaning filter device.

In this way, the exit of debris is facilitated, even with a low flow of rainwater. When the flow of rainwater is somewhat more intense, the central rigid filter element 11 assumes a near horizontal position, due to the action of the impact of the flow of rainwater against it. When the flow of rainwater is high, the filter element bends in a direction opposite to its initial position. The articulated filter elements 10, 13 expand or retract, conforming to the movement of the central semi-rigid filter element 11.

These movements of the filter elements 10, 11, 13 serve to facilitate the filtration of water and also the expulsion of debris that accumulates inside them, providing a filtering capacity of the filtering device which remains substantially constant since there is virtually no accumulation of debris inside the filter elements 10, 11, 13.

### SUMMARY OF THE INVENTION

The invention is defined by the appended claims.

### BRIEF DESCRIPTION OF THE DRAWINGS

The invention will now be described in greater detail together with the accompanying drawings which, for illustrative purposes only, depict some embodiments of the invention.
Figure 1 depicts a front cross-sectional view of the self-cleaning filter device for rainwater, object of the present invention, in a situation in which the flow of rainwater and the volume of debris carried by rainwater to the interior of the continuous filter element is light.
Figure 2 depicts a front cross-sectional view of the self-cleaning filter device, object of the present invention, in a situation where the flow of rainwater and the volume of debris carried by rainwater into the continuous filter element begins to increase.
Figure 3 depicts a front sectional view of the self-cleaning filter device, object of the present invention, in a situation where the flow of rainwater and volume of debris carried by the rainwater flow to the inside the continuous filter element is heavy.
Figure 4 depicts a front view of the filter element of the self-cleaning filter device, whose lower part is not provided with the filtering means, to show the internal spiral element.

### DETAILED DESCRIPTION OF THE INVENTION

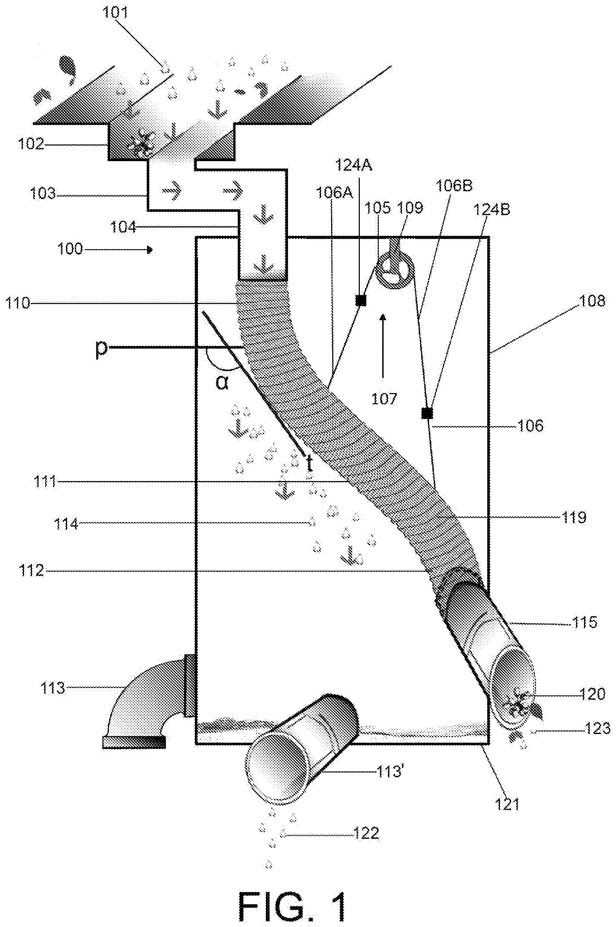

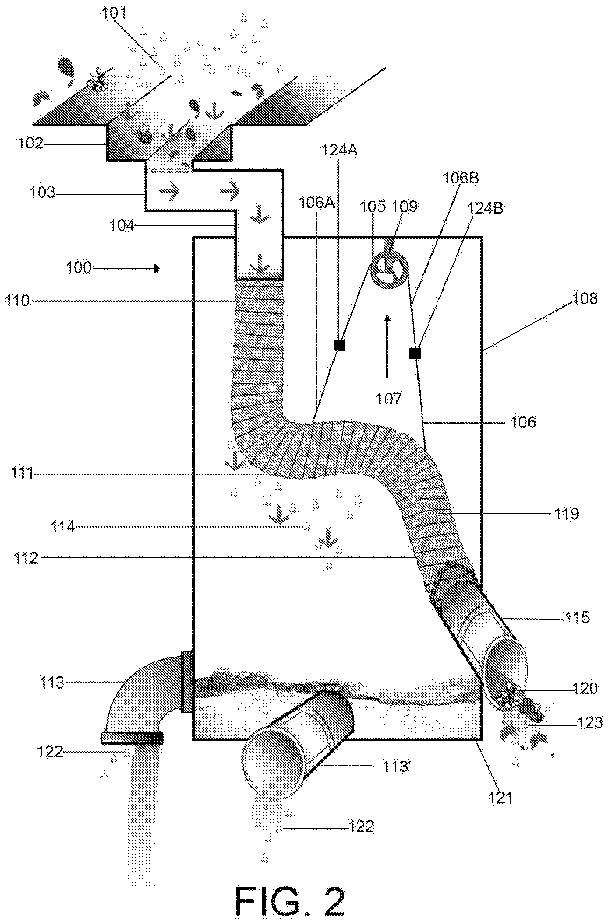

The self-cleaning filter device adaptable to the volume of rainwater **100** can be observed in Figures 1, 2 and 3, object of the present invention, which comprises a body **108** provided with a rainwater inlet **104,** a debris outlet **115** and at least one filtered rainwater outlet **113.** Two filtered rainwater outlets **113** and **113'** are shown in the drawings, but there is no limitation to the number of outlets that may be employed.

A rainwater collection system **102** collects rainwater **101** and connects to a supply duct **103,** which connects to the rainwater inlet **104** of the self-cleaning filter device adaptable to the volume of rainwater **100.**

The self-cleaning filter device adaptable to the volume of rainwater **100** is provided with a filter element **119** comprising an upper portion **110,** a central portion **111,** and a lower portion **112.** The upper portion **110** of the continuous filter element **119** is connected to the rainwater inlet **104,** and the lower portion **112** of the continuous filter element **119** is connected to the debris outlet **115** of the self-cleaning filter device adaptable to the volume of rainwater **100.**

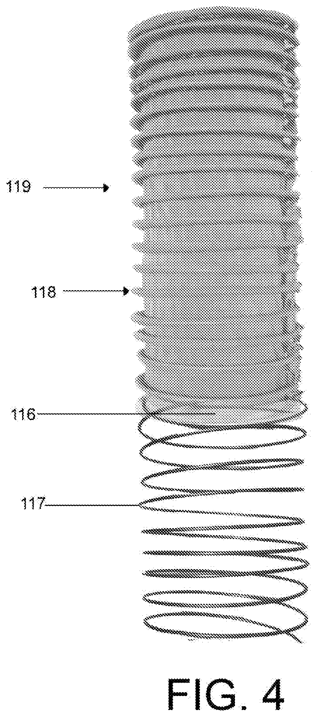

The filter element **119** is depicted in Figure 4. In a preferred embodiment it comprises a continuous flexible element **117,** able to contract or expand. A filtering means **116** covers and is secured to the flexible element **117.**

In this embodiment the flexible element **117** comprises a continuous spiral element and the filtering means **116** is a multifilament fabric, allowing little penetration of particulate material in the interstices of the web, whose porosity is lower than the size of the smaller dimension of particulate material to be retained. As such, the filter element **119** takes the form of a fully flexible an continuous bellows **118,** providing the filter element **119** with flexibility and ability to be compressed or to expand.

A regulating device **107** is also provided within the self-cleaning filter device adaptable to the volume of rainwater **100,** which comprises a support member **105** attached to the inner upper part of the body **108** of the self-cleaning filter device adaptable to the volume of rainwater **100** by means of a fixing structure **109.**

A flexible fixation element **106,** in this case a cable, rests on the support member **105** and has a first segment **106a** attached to the upper portion of the filter element **110** of the filter element **119,** and a second segment of the flexible fixation element **106b** connected to the lower portion **112** of the filter element **119.**

First and second adjustable limiting devices **124a** and **124b** may also be provided on the flexible fixation element **106,** installed respectively on the first segment **106a** and the second segment **106b,** which serve to limit the travel of the flexible fixation element **106** on the rotary support member **105.** The positioning of the first and second adjustable limiting devices **124a** and **124b** may be adjusted in order to enable the filter element **119** to better operate in accordance to the intensity of the rainwater.

The support member **105** must be able to allow the flexible fixation element **106** to easily travel along it. In a preferred embodiment the support member **105** is a pulley, which facilitates the travel of the flexible fixation element **106** along it.

The process of operation of the self-cleaning filter device adaptable to the volume of rainwater **100** is quite simple. When it starts raining, rain water **101** is collected by the rainwater collection system **102** and conducted by means of the supply duct **103** to the rainwater inlet **104** of the self-cleaning filter device adaptable to the volume of rainwater **100.**

The amount of debris carried into the filter element **119** during this initial period of rain is usually more intense, and it is desirable that this debris be removed as quickly as possible so as not to impair the usefulness of the filter element **119.**

During periods of no rain, or when the volume of rainwater passing through the interior of the filter element **119** is not yet intense, the filter element **119** assumes a shape as shown in Figure 1, wherein the upper region of the upper portion **110** of the filter element **119** is substantially upright, for being connected to the rainwater inlet **104,** but the remaining part of the upper portion **110** and the central **111** and lower **112** portions of the filter element **119** are in a substantially inclined position, wherein an imaginary tangent line "t" located at the middle region of the upper portion **110** of the filter element **119** forms an obtuse angle "**α**" with respect to an imaginary horizontal line **"p",** as can be seen in Figure 1.

In this initial operating situation, where the filter element **119** is substantially inclined and the flexible element **117** are substantially retracted, which facilitates the removal of waste because the water flow, even if still at low volume, can lead debris toward the debris outlet **115** due to the substantial inclination of the filter element **119.**

A filtering process of rainwater flow will occur at the same time that debris is removed from the interior of the filter element **119.** As can be seen in Figure 1, filtered rain water **114** exits the filter element **119** and will be deposited in the lower body region **121** of the body **108** of the self-cleaning filter device adaptable to the volume of rainwater **100,** which is drained by means of at least one filtered rainwater outlet **113.**

In a situation where rain intensity begins to increase, and becomes moderate, the force exerted by the impact of the flow of rainwater and debris on the filter element **119** will increase, especially on its upper portion **110.** This impact force will cause the flexible element **117** to expand. In the present embodiment, as the flexible element **117** is a spiral element, its spires begin to move away from each other in certain regions, especially in border regions between the central portion **111** and the upper and lower portions **110, 112** of the filter element **119.**

Since the first and second segments **106a, 106b** of the flexible fixation element **106** regulating device **107** are respectively connected to the upper portion **110** and the lower portion **112** of the filter element **119,** they cause a limitation in this movement of expansion of the flexible element **117.** In the present embodiment, as the flexible element **117** is a spiral element, the movement of its spires away from each other is limited. Despite this limitation, the fact that the flexible fixation element **106** of the regulating device **107** can move on the surface of the rotary support member **105** permits some adjustments to occur in the positioning of the filter element **119,** but only in a limited manner.

With this limitation of movement, the upper portion **110** and the central portion **111** of the filter element **119** will initially tend to expand more. In this situation the impact of the rainwater flow containing debris against the upper portion **110** and the central portion **111** of the filter element **119** will cause the flexible element **117** to expand in the regions of these two upper **110** and central **111** portions of the filter element **119.** The lower portion **112** will also move away from each other, as the regulating device **107** limits the movement of the filter element **119.** In the present embodiment, as the flexible element **117** is a spiral element, the spires will move away from each other.

Therefore, the upper portion **110** and the central **111** and lower **112** portions of the filter element **119** will begin to change their substantially inclined shape. In this situation the central portion **111** of the filter element **119** tends to assume a substantially horizontal position, which favors filtering of the passing flow of rainwater in the region of the central portion **111** of the filter element **119,** in special in the region of the central portion **111** of the filter element **119,** thereby reducing waste of water.

In the event of a significant increase in the flow of rainwater in a heavier rain situation, and an ensuing increase in the impact of this flow on the filter element **119,** and also by the debris carried by the rainwater flow, the flexible element **117** will have a stronger tendency to expand, and in special the lower portion **112.** In the present embodiment, as the flexible element **117** is a spiral element, its spires will have a tendency to move away from each other. Consequently the spires of the upper portion **110** and the central portion **111** of the filter element **119** will tend to expand even more, the same occurring with the spires of the flexible element **117** in the lower portion **112,** which will also move away from each other even more.

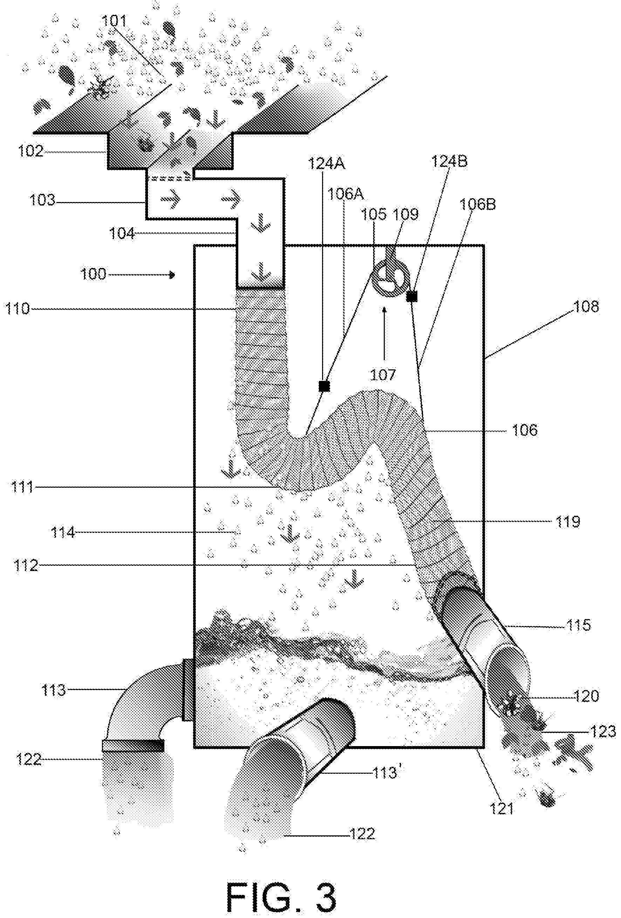

Consequently the filter element **119** assumes a very similar configuration to a letter "S", as depicted in Figure 3, due to the limitation of its movement caused by the regulating device **107.**

In this process of variations of the shape of the filter element **119,** as a result of variations in the flow of rainwater, the flexible element **117** will tend to suffer alternate expansion and retraction movements, thereby causing a huge oscillating motion in the whole filter element **119,** and the combination of the variations of the shape of the filter element **119** and this oscillating motion, in special in the region of the central portion **111** of the filter element **119,** will increase the expulsion of debris from the interior of the filter element **119** towards the debris outlet **115.**

Thus, the form to be taken by the filter element **119** will always be adjusted as a consequence of the flowrate of the rainwater flow and the volume of debris carried by this flow.

It should be mentioned that the first and second limiting devices **124a** and **124b** serve to limit the travel of the flexible fixation element **106** on the surface of the rotary support member **105** in order to guarantee that the filter element **119** will suffer the variations in shape shown above, within limits that ensure that the filtering process always occurs effectively.

It is also important to mention that the shapes depicted in Figures 1, 2 and 3 which the filter element **119** assumes in view of the flow rate of rainwater are exemplary only, and cannot be considered as limitation of the invention. In use, the filter element **119** will be able to assume a number of shapes responsive to the flowrate of rainwater an debris.

The use of the filter element **119** provided with a flexible element **117** allows the debris carried by rainwater flow to be rapidly discarded by the debris outlet **115,** which favors the filtering process and reduces waste of water. In Figures 1, 2 and 3 it can be observed filtered rainwater flow **122** exiting the filtered rainwater outlet **113.**

Tests made by the Applicant, in which the rainwater flow contained considerable amount of debris, showed the volume of unfiltered rainwater flow **123** that could not be filtered, which exits the debris outlet **115,** to be very small.

The self-cleaning filter device adaptable to the volume of rainwater **100** is provided with inspection windows, not shown in the Figures, which facilitate the cleaning of the filter, the cleaning or replacing of the filter element **119,** regulation of the regulating device **107,** periodic inspections, etc.

For example, in situations in which the interstices of the filter means **116** are impregnated with small particulate material, thereby reducing its capacity to filter rainwater, these inspection windows may be used to allow access for maintenance workers to use highpressure water jets to facilitate the removal of these small particulate particles from inside the interstices of the filter means **116.**

If it is necessary to change the positions where the first and second segments **106a, 106b** of the flexible fixation element **106** of the regulating device **107** in order to meet a specific need, multiple connection points may be provided in the filter element **119** to connect the ends of the first and second segments **106a, 106b** of the flexible fixation element **106,** thereby allowing to adjust the regulation of the regulating device **107** according to momentary convenience.

As a reference, the table below gives some values used by experts to define rain intensity:

| **Light rain** | Precipitation whose intensity is less than 5.0 mm / h. |
|---|---|
| **Moderate rain** | Precipitation whose intensity is comprised between 5.0 and 25 mm / h. |
| **Heavy rain** | Precipitation whose intensity is comprised between 25.1 and 50 mm / h. |
| **Very heavy rain** | Precipitation whose intensity is greater than 50.0 mm / h. |
| **Thunderstorms** | Intense rainfall which occurs in a short time period and is spatially restricted. |

The provision of a self-cleaning filter device adaptable to the volume of rainwater **100** having a fully flexible and continuous filter element **119** able to contract or to expand enables a prompt reaction of said continuous filter element **119** to the variations of the flow of rainwater, thereby making the self-cleaning filter device adaptable to the volume of rainwater **100** object of the invention very efficient to filter a rainwater flow, minimizing the losses of rainwater.

Modifications and adjustments can be made in the self-cleaning filter device adaptable to the volume of rainwater **100** without departing from its basic concept, as described above.

For example, is possible to connect separate parts of flexible filter elements each other in order to provide a filter element having basically the same features as the continuous filter element **119** described herein.

However, it is preferable to use a continuous filter element **119** as disclosed above, in order to prevent accidental disconnections between the connected parts, which may occur in consequence of the vigorous movements of expansion and retraction of the filter element resulting from the passage of the flow of rainwater into it.

### LIST OF COMPONENTS

- **100**: self-cleaning filter device adaptable to the volume of rainwater
- **102**: rainwater collection system
- **103**: supply duct
- **104**: rainwater inlet
- **105**: rotary support member
- **106**: flexible fixation element
- **106a**: first segment (of the flexible fixation element)
- **106b**: second segment (of the flexible fixation element)
- **107**: regulating device
- **108**: body
- **109**: fixing structure
- **110**: upper portion (of the filter element)
- **111**: central portion (of the filter element)
- **112**: lower portion (of the filter element)
- **113**: filtered rainwater outlet
- **114**: filtered rainwater
- **115**: debris outlet
- **116**: filter means
- **117**: flexible element
- **118**: bellows
- **119**: filter element
- **120**: discarded debris
- **121**: lower body region
- **122**: filtered rainwater flow
- **123**: unfiltered rainwater flow
- **124a**: first limiting device (of the first segment 106a of the flexible fixation segment 106)
- **124b**: second limiting device of the second segment 106b of the flexible fixation element 106

## Claims

1. A self-cleaning filter device adaptable to a volume of rainwater comprising:
- a body (108) including:
- a rainwater inlet (104);
- a debris outlet (115);
- at least one filtered rainwater outlet (113);
- a flexible filter element (119) provided inside the body and comprising an expandable and contractible fully flexible element (117) and a filter means (116) covering and secured to the expandable and contractible fully flexible element, the flexible filter element having an upper end directly attached to said rainwater inlet and a lower end directly attached to said debris outlet, said flexible filter element being provided with an upper portion (110), a central portion (111) and a lower portion (112);
- a regulating device (107) provided inside the body and connected to the flexible filter element,
wherein the regulating device comprises: J Z
- a fixing structure (109) attached to an inner upper part of the body;
- a support member (105) supported by the fixing structure;
- a flexible fixation element (106) supported by the support member, said flexible fixation element comprising first and second segments (106a, 106b) having ends respectively connected to said upper and lower portions of the flexible filter element.

2. A self-cleaning filter device adaptable to the volume of rainwater as in Claim 1, wherein said expandable and contractible fully flexible element (117) comprises a spiral element.

3. A self-cleaning filter device adaptable to the volume of rainwater as in Claim 2, wherein said flexible filter element comprises separate flexible parts connected to each other.

4. A self-cleaning filter device adaptable to the volume of rainwater as in Claim 1, wherein the flexible fixation element is a cable.

5. A self-cleaning filter device adaptable to the volume of rainwater as in Claim 1, wherein said first and second segments of the flexible fixation element are respectively provided with adjustable first and second limiting devices.

6. A self-cleaning filter device adaptable to the volume of rainwater as in Claim 1, wherein said support member is a pulley.

7. A self-cleaning filter device adaptable to the volume of rainwater as in Claim 1, wherein said filter means comprises a multifilament fabric whose porosity is lower than the size of the smaller dimension of particulate material to be retained therein.

8. A method to filter rainwater using a self-cleaning filter device adaptable to a volume of rainwater provided with
- a body (108);
- a rainwater inlet (104);
- a debris outlet (115);
- at least one filtered rainwater outlet (113);
- a filter element (119) provided inside the body and comprising an expandable flexible element (117) and a filter means (116) covering and secured to the expandable flexible element, said filter element being provided with an upper portion (110) having an upper end directly attached to said rainwater inlet, a central portion (111) and a lower portion (112), which is directly attached to said debris outlet;
- a regulating device (107) provided inside the body and connected to the filter element, comprising:
- a fixing structure (109) attached to an inner upper part of the body;
- a support member (105) supported by the fixing structure;
- a flexible fixation element (106) supported by the support member, said flexible fixation element comprising first and second segments having ends respectively connected to said upper and lower portions of the filter element, said first and second segments of the flexible fixation element are respectively provided with adjustable first and second limiting devices (124a, 124b); the method comprising the steps of:
- allowing collected rainwater to pass through said rainwater inlet and to enter into said filter device;
- allowing the flow of rainwater to be filtered by the filter element and to be collected in the bottom of said body;
- allowing the filtered rainwater to be exited via said at least one filtered rainwater outlet;
- allowing the filtered debris to be expelled throughout the debris outlet;
- allowing said upper, central and lower portions of the filter element to expand and retract, thereby making an oscillating motion responsive to both the flowrate of rainwater and the concomitant action of said first and second segments of the flexible fixation element of the regulating device;
- allowing said oscillating motion to assist the expulsion of debris from the inner part of the filter device to the debris outlet.

9. A method to filter rainwater as in claim 8 wherein said expandable flexible element is a spiral element.

10. A method to filter rainwater as in claim 9 wherein said filter means comprises a multifilament fabric whose porosity is lower than the size of the smaller dimension of particulate material to be retained therein.

11. A method to filter rainwater as in claim 10 wherein said support member is a pulley.

12. A method to filter rainwater as in claim 11, wherein said spiral element is continuous.

## Patentansprüche

1. Selbstreinigende Filtervorrichtung, die an eine Regenwassermenge anpassbar ist und umfasst:
- einen Körper (108), der umfasst:
- einen Regenwassereinlass (104);
- einen Schmutzauslass (115);
- mindestens einen gefilterten Regenwasserauslass (113);
- ein flexibles Filterelement (119), das innerhalb des Körpers vorgesehen ist und ein expandierbares und zusammenziehbares, vollständig flexibles Element (117) und ein Filtermittel (116) umfasst, das das expandierbare und zusammenziehbare, vollständig flexible Element bedeckt und daran befestigt ist, wobei das flexible Filterelement ein oberes Ende, das direkt an dem Regenwassereinlass angebracht ist, und ein unteres Ende, das direkt an dem Schmutzauslass angebracht ist, aufweist, wobei das flexible Filterelement mit einem oberen Abschnitt (110), einem mittleren Abschnitt (111) und einem unteren Abschnitt (112) versehen ist;
- eine Regelvorrichtung (107), die innerhalb des Körpers vorgesehen und mit dem flexiblen Filterelement verbunden ist,
wobei die Regelvorrichtung umfasst:
- eine Befestigungsstruktur (109), die an einem inneren oberen Teil des Körpers angebracht ist;
- ein Stützelement (105), das von der Befestigungsstruktur gestützt wird;
- ein flexibles Befestigungselement (106), das von dem Stützelement gestützt wird, wobei das flexible Befestigungselement erste und zweite Segmente (106a, 106b) umfasst, deren Enden jeweils mit den oberen und unteren Abschnitten des flexiblen Filterelements verbunden sind.

2. Selbstreinigende Filtervorrichtung, die an die Regenwassermenge anpassbar ist, nach Anspruch 1, wobei das expandierbare und zusammenziehbare, vollständig flexible Element (117) ein Spiralelement umfasst.

3. Selbstreinigende Filtervorrichtung, die an die Regenwassermenge anpassbar ist, nach Anspruch 2, wobei das flexible Filterelement separate flexible Teile umfasst, die miteinander verbunden sind.

4. Selbstreinigende Filtervorrichtung, die an die Regenwassermenge anpassbar ist, nach Anspruch 1, wobei das flexible Befestigungselement ein Kabel ist.

5. Selbstreinigende Filtervorrichtung, die an die Regenwassermenge anpassbar ist, nach Anspruch 1, wobei das erste und zweite Segment des flexiblen Befestigungselements jeweils mit einer einstellbaren ersten und zweiten Begrenzungsvorrichtung versehen sind.

6. Selbstreinigende Filtervorrichtung, die an die Regenwassermenge anpassbar ist, nach Anspruch 1, wobei das Stützelement eine Riemenscheibe ist.

7. Selbstreinigende Filtervorrichtung, die an die Regenwassermenge anpassbar ist, nach Anspruch 1, wobei das Filtermittel ein Multifilamentgewebe umfasst, dessen Porosität geringer ist als die Größe der kleineren Abmessung des darin zurückzuhaltenden Partikelmaterials.

8. Verfahren zum Filtern von Regenwasser unter Verwendung einer selbstreinigenden Filtervorrichtung, die an eine Regenwassermenge anpassbar ist und umfasst:
- einen Körper (108);
- einen Regenwassereinlass (104);
- einen Schmutzauslass (115);
- mindestens einen gefilterten Regenwasserauslass (113);
- ein Filterelement (119), das innerhalb des Körpers vorgesehen ist und ein expandierbares flexibles Element (117) und ein Filtermittel (116) umfasst, das das expandierbare flexible Element bedeckt und daran befestigt ist, wobei das Filterelement mit einem oberen Abschnitt (110) versehen ist, der ein oberes Ende aufweist, das direkt an dem Regenwassereinlass angebracht ist, einem mittleren Abschnitt (111) und einem unteren Abschnitt (112), der direkt an dem Schmutzauslass angebracht ist;
- eine Regelvorrichtung (107), die innerhalb des Körpers vorgesehen und mit dem Filterelement verbunden ist und umfasst:
- eine Befestigungsstruktur (109), die an einem inneren oberen Teil des Körpers angebracht ist;
- ein Stützelement (105), das von der Befestigungsstruktur gestützt wird;
- ein von dem Stützelement getragenes flexibles Befestigungselement (106), wobei das flexible Befestigungselement erste und zweite Segmente umfasst, deren Enden jeweils mit dem oberen und unteren Abschnitt des Filterelements verbunden sind, wobei das erste und zweite Segment des flexiblen Befestigungselements jeweils mit einstellbaren ersten und zweiten Begrenzungsvorrichtungen (124a, 124b) versehen sind; wobei das Verfahren die Schritte umfasst:
- Ermöglichen, dass gesammeltes Regenwasser durch den Regenwassereinlass fließt und in die Filtervorrichtung eintritt;
- Ermöglichen, dass der Regenwasserfluss durch das Filterelement gefiltert und am Boden des Körpers gesammelt wird;
- Ermöglichen, dass das gefilterte Regenwasser über den mindestens einen gefilterten Regenwasserauslass abgelassen wird;
- Ermöglichen, dass der gefilterte Schmutz durch den Schmutzauslass ausstoßt;
- Ermöglichen, dass sich der obere, mittlere und untere Abschnitt des Filterelements ausdehnen und zusammenziehen, wodurch eine oszillierende Bewegung ausgeführt wird, die sowohl auf die Durchflussmenge des Regenwassers als auch auf die gleichzeitige Wirkung des ersten und zweiten Segmente des flexiblen Befestigungselements der Regelvorrichtung reagiert;
- Ermöglichen, dass die oszillierende Bewegung das Ausstoßen von Schmutz aus dem inneren Teil der Filtervorrichtung zum Schmutzauslass unterstützt.

9. Verfahren zum Filtern von Regenwasser nach Anspruch 8, wobei das expandierbare flexible Element ein Spiralelement ist.

10. Verfahren zum Filtern von Regenwasser nach Anspruch 9, wobei das Filtermittel ein Multifilamentgewebe umfasst, dessen Porosität geringer ist als die Größe der kleineren Abmessung des darin zurückzuhaltenden Partikelmaterials.

11. Verfahren zum Filtern von Regenwasser nach Anspruch 10, wobei das Stützelement eine Riemenscheibe ist.

12. Verfahren zum Filtern von Regenwasser nach Anspruch 11, wobei das Spiralelement durchgehend ist.

## Revendications

1. Dispositif de filtration autonettoyant adaptable à un volume d'eau de pluie comprenant :
- un corps (108) comportant :
- une entrée d'eau de pluie (104) ;
- une sortie de débris (115) ;
- au moins une sortie d'eau de pluie filtrée (113) ;
- un élément de filtration flexible (119) disposé à l'intérieur du corps et comprenant un élément flexible entièrement extensible et rétractable (117) et un moyen de filtration (116) recouvrant l'élément flexible entièrement extensible et rétractable et fixé à celui-ci, l'élément de filtration flexible ayant une extrémité supérieure directement fixée à ladite entrée d'eau de pluie et une extrémité inférieure directement fixée à ladite sortie de débris, ledit élément de filtration flexible étant doté d'une partie supérieure (110), d'une partie centrale (111) et d'une partie inférieure (112) ;
- un dispositif de régulation (107) disposé à l'intérieur du corps et relié à l'élément de filtration flexible,
dans lequel le dispositif de régulation comprend :
- une structure de fixation (109) fixée à une partie supérieure interne du corps ;
- un organe de support (105) supporté par la structure de fixation ;
- un élément de fixation flexible (106) supporté par l'organe de support, ledit élément de fixation flexible comprenant de premier et deuxième segments (106a, 106b) ayant des extrémités respectivement reliées auxdites parties supérieure et inférieure de l'élément de filtration flexible.

2. Dispositif de filtration autonettoyant adaptable au volume d'eau de pluie selon la revendication 1, dans lequel ledit élément flexible entièrement extensible et rétractable (117) comprend un élément en spirale.

3. Dispositif de filtration autonettoyant adaptable au volume d'eau de pluie selon la revendication 2, dans lequel ledit élément de filtration flexible comprend des parties flexibles séparées reliées entre elles.

4. Dispositif de filtration autonettoyant adaptable au volume d'eau de pluie selon la revendication 1, dans lequel l'élément de fixation flexible est un câble.

5. Dispositif de filtration autonettoyant adaptable au volume d'eau de pluie selon la revendication 1, dans lequel lesdits premier et deuxième segments de l'élément de fixation flexible sont respectivement dotés de premier et deuxième dispositifs de limitation réglables.

6. Dispositif de filtration autonettoyant adaptable au volume d'eau de pluie selon la revendication 1, dans lequel ledit organe de support est une poulie.

7. Dispositif de filtration autonettoyant adaptable au volume d'eau de pluie selon la revendication 1, dans lequel ledit moyen de filtration comprend un tissu multifilament dont la porosité est inférieure à la taille de la plus petite dimension de matière particulaire devant être retenue dans celui-ci.

8. Procédé de filtration d'eau de pluie à l'aide d'un dispositif de filtration autonettoyant adaptable à un volume d'eau de pluie doté
- d'un corps (108) ;
- d'une entrée d'eau de pluie (104) ;
- d'une sortie de débris (115) ;
- d'au moins une sortie d'eau de pluie filtrée (113) ;
- d'un élément de filtration (119) disposé à l'intérieur du corps et comprenant un élément flexible extensible (117) et un moyen de filtration (116) recouvrant l'élément flexible extensible et fixé à celui-ci, ledit élément de filtration étant doté d'une partie supérieure (110) ayant une extrémité supérieure directement fixée à ladite entrée d'eau de pluie, d'une partie centrale (111) et d'une partie inférieure (112), qui est directement fixée à ladite sortie de débris ;
- d'un dispositif de régulation (107) disposé à l'intérieur du corps et relié à l'élément de filtration, comprenant :
- une structure de fixation (109) fixée à une partie supérieure interne du corps ;
- un organe de support (105) supporté par la structure de fixation ;
- d'un élément de fixation flexible (106) supporté par l'organe de support, ledit élément de fixation flexible comprenant de premier et deuxième segments ayant des extrémités respectivement reliées auxdites parties supérieure et inférieure de l'élément de filtration, lesdits premier et deuxième segments de l'élément de fixation flexible sont respectivement dotés de premier et deuxième dispositifs de limitation réglables (124a, 124b) ; le procédé comprenant les étapes consistant à :
- permettre à de l'eau de pluie collectée de passer à travers ladite entrée d'eau de pluie et d'entrer dans ledit dispositif de filtration ;
- permettre au flux d'eau de pluie d'être filtré par l'élément de filtration et d'être collecté au fond dudit corps ;
- permettre à l'eau de pluie filtrée d'être évacuée via ladite au moins une sortie d'eau de pluie filtrée ;
- permettre aux débris filtrés d'être expulsés à travers la sortie de débris ;
- permettre auxdites parties supérieure, centrale et inférieure de l'élément de filtration de s'étendre et de se rétracter, rendant ainsi un mouvement oscillant réactif à la fois au débit d'eau de pluie et à l'action concomitante desdits premier et deuxième segments de l'élément de fixation flexible du dispositif de régulation ;
- permettre audit mouvement oscillant de faciliter l'expulsion des débris de la partie interne du dispositif de filtration vers la sortie des débris.

9. Procédé de filtration d'eau de pluie selon la revendication 8, dans lequel ledit élément flexible extensible est un élément en spirale.

10. Procédé de filtration d'eau de pluie selon la revendication 9, dans lequel ledit moyen de filtration comprend un tissu multifilament dont la porosité est inférieure à la taille de la plus petite dimension de matière particulaire devant être retenue dans celui-ci.

11. Procédé de filtration d'eau de pluie selon la revendication 10, dans lequel ledit organe de support est une poulie.

12. Procédé de filtration d'eau de pluie selon la revendication 11, dans lequel ledit élément en spirale est continu.
